# EUROPEAN PATENT SPECIFICATION

(11) **EP 0 768 964 B1**
(45) Date of publication and mention of the grant of the patent: **21.06.2000**
(21) Application number: 96911058.4
(22) Date of filing: 25.04.1996
(51) Int. Cl.: B60R 22/46

(54) **PRETENSIONER FOR A VEHICLE SAFETY RESTRAINT**
GURTSTRAMMER FÜR EIN FAHRZEUGSICHERHEITS-RÜCKHALTESYSTEM
PRETENSEUR POUR CEINTURE DE SECURITE DE VEHICULE

(30) Priority: 25.04.1995 GB 9508374
(43) Date of publication of application: 23.04.1997
(73) Proprietor: BREED AUTOMOTIVE TECHNOLOGY, INC., Lakeland, County of Polk, Florida (US)
(72) Inventor: SMITHSON, Alan, George, Wetheral, Cumbria CA4 8QD (GB)
(74) Representative: Freeman, Jacqueline Carol
(86) International application number: GB9601000
(87) International publication number: WO9633890

(56) References cited:
- DE-A- 4 305 596
- FR-A- 2 373 296
- US-A- 4 381 084

## Description

This invention relates to vehicle passenger safety restraint pretensioning devices.

In a vehicle safety restraint system it is usual to provide a seat occupant with a seat belt comprising a lap portion of webbing passing from an anchorage point across the lap of the occupant to a buckle tongue and thereafter from the buckle tongue diagonally across the torso of the occupant and via a shoulder height D-ring to an emergency locking retractor. A modern seat belt retractor is a low friction mechanism requiring only a light rewind spring. This contributes to optimum comfort for the occupant but means that the seat belt webbing may rest only lightly against the body of the occupant. In order to minimise forward movement of an occupant following lock-up of the retractor, it has increasingly become the practice to provide vehicle sensitive means to cause pretensioning of the belt webbing at the onset of a crash condition. Such pretensioning can be effected for example by operating the retractor to rewind the belt or alternatively by effectively shortening the buckle anchorage.

One known type of pretensioner acts by rotating a retractor spool onto which the seat belt webbing is wound, the retractor spool being driven by a spring or other rotary drive. Since under normal conditions modern retractor spools must be free to move to pay out or take in seat belt webbing in the interests of passenger comfort, then known pretensioners of this type include a mechanical clutch which mechanically connects the drive means to the retractor spool only under crash conditions.

There are disadvantages in the use of mechanical clutches for this application since they tend to comprise several movable components which increases the cost of manufacture, and decreases their reliability.

In addition, when the clutch engages, a shock load is imposed on the pretensioner. Since take-up of seat belt webbing must be extremely rapid, these shock loads may be considerable.

US-A-4,381,084 describes a retractor with a pretensioner having a rotary member formed as a turbine connected to a webbing winding spool, and drive means actuable in a crash situation.

In accordance with the present invention, there is provided a pretensioner for a vehicle safety restraint comprising a first rotary member (6) connected to a webbing winding spool of a restraint retractor, and drive means actuable in response to a crash condition, and characterised by a second rotary member (10) coaxial with the first rotary member (6) and driven by the drive means and wherein the two coaxial rotary members (6,10) have opposing surfaces spaced by a cavity (14) filled with a coupling fluid, the opposing surfaces (12,8) being shaped and relatively positioned such that motion of one member relative to the other member is transmitted through the coupling fluid to the other member and to the winding spool.

Preferably, the arrangement is such that the coupling fluid acts as a torque converter.

Preferably, the fluid containing cavity is located in a radial direction between the two rotary members.

In a preferred embodiment of the invention, the first rotary member is formed as an outer rotor within which is a cavity containing the fluid and the second rotary member which is formed as a turbine.

Preferably, the outer rotor comprises inwardly extending vanes projecting into the fluid cavity, and the turbine comprises outwardly extending vanes projecting into the fluid filled cavity.

Preferably, the outer rotor and the turbine are contained in a sealed outer casing.

In a particularly preferred embodiment of the present invention, the first rotary member is adapted to be driven by reaction forces exerted by expanding gas.

Preferably, the expanding gas is generated by at least one gas generator and is emitted in an approximately tangential direction from the first rotary member.

There is also provided, in accordance with the present invention, a seat belt retractor provided with a pretensioner as described above.

The use of a pretensioner with a fluid actuated coupling, in accordance with the invention, provides for smooth take up of belt retraction forces without the shock loads associated with mechanical systems.

Further, while the type of clutch used in known pretensioners cannot increase the torque on the retractor spool, the fluid actuated coupling can act as a torque convertor, providing torque which is large when the difference in rotational velocity between the drive means and the retractor spool is large, and which declines as this difference decreases. In a pretensioning sequence, the above mentioned difference of velocities is largest at the start of the sequence, when the spool is stationary. Thus the largest torque is exerted to initially accelerate the retractor spool, which is clearly desirable.

By virtue of this increase in torque, it is possible to use drive means of low torque which operate at high rates of rotation, such as a gas efflux drive.

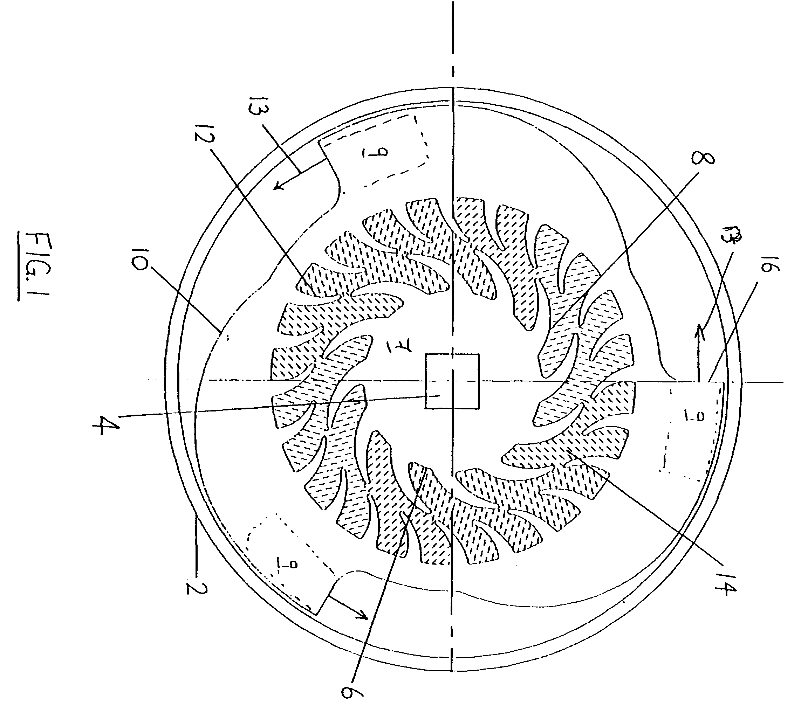

A specific embodiment of the present invention will now be described, by way of example only, with reference to the accompanying single figure, which is a cross section through a pretensioner according to the invention.

The figure shows a sealed, stand alone unit with working parts contained in.an outer casing 2, of circular cross section. In use, the outer casing is attached or fixed, in relation to a retractor housing, to a seat belt retractor mechanism. The spool axle of the retractor projects into the pretensioner to engage with a shaped aperture 4 at the centre of a rotatably mounted turbine 6, so that rotation of the turbine 6 causes rotation of the retractor spool. In the present embodiment, the shaped aperture 4 is square: it could of course be any shape which will grip the spool axle strongly enough to rotate it.

The turbine 6 comprises a circular body portion from which a number of curved turbine vanes 8 project. The vanes extend in a radially outward direction.

The turbine 6 is coaxial with and mounted within an outer rotor 10. The outer rotor 10 comprises an inner surface with a circular cross-section facing the turbine 6 and a number of curved rotor vanes 12, extending from the inner surface towards turbine 6, i.e. in a radially inward direction, but curved in the opposite direction to the turbine vanes 8.

A space 14 between the turbine 6 and the inner surface of the outer rotor 10 is filled with oil or other suitable fluid.

In operation of the pretensioner, the outer rotor 10 is rotationally driven, and the rotor vanes 12 create powerful eddy currents within the oil in space 14. These eddy currents act on the turbine vanes 8 exerting a torque on the turbine 6 and causing it to rotate thus rotating the retractor spool.

Driving of the outer rotor 10 is achieved using gas generators mounted in peripheral portions 9 of the outer rotor 10. The outer surface of the outer rotor 10 is cut away adjacent the portions 9 in three places, to form shoulders 16 in each case through which gas is expelled in the direction of arrows B.. The reaction force from this process drives the outer rotor 10 rotationally.

The three gas generators may be simultaneously or sequentially fired, depending on the torque characteristic desired. Electric or electronic timing apparatus may be used, of standard constructions.

Simultaneous firing will produce a very high initial torque, reducing rapidly, whereas phased firing will produce a sustained torque over a longer period.

The outer casing 2 and the outer rotor 10 may be injection moulded in a plastics material; in view of the large forces to which it is subjected, however, the turbine 6 is preferably die cast.

## Claims

1. A pretensioner for a vehicle safety restraint comprising a first rotary member (6) connected to a webbing winding spool of a restraint retractor, and drive means actuable in response to a crash condition, and characterised by a second rotary member (10) coaxial with the first rotary member (6) and driven by the drive means and wherein the two coaxial rotary members (6,10) have opposing surfaces spaced by a cavity (14) filled with a coupling fluid, the opposing surfaces (12,8) being shaped and relatively positioned such that motion of one member relative to the other member is transmitted through the coupling fluid to the other member and to the winding spool.

2. A pretensioner for a vehicle safety restraint according to claim 1, wherein the shape and position of the opposing surfaces (12,8) of the rotary members (6,10) is such that the coupling fluid acts as a torque convertor.

3. A pretensioner for a vehicle safety restraint according to any preceding claim wherein the fluid containing cavity (14) is located in a radial direction between the two relatively rotary members(6,10).

4. A pretensioner for a vehicle safety restraint according to any preceding claim wherein the first rotary member is formed as an outer rotor (10) within which is a cavity (14) containing the fluid and the second rotary member which is formed as a turbine (6).

5. A pretensioner for a vehicle safety restraint according to claim 4 wherein the outer rotor (10) comprises inwardly extending vanes (12) projecting into the fluid cavity (14), and the turbine (6) comprises outwardly extending vanes (8) projecting into the fluid filled cavity (14).

6. A pretensioner for a vehicle safety restraint according to claim 4 or claim 5 wherein the outer rotor (10) and the turbine (6) are contained in a sealed outer casing (2).

7. A pretensioner for a vehicle safety restraint according to any preceding claim wherein the first rotary member (10) is adapted to be driven by reaction forces exerted by expanding gas.

8. A pretensioner for a vehicle safety restraint according to claim 7 wherein the expanding gas is generated by at least one gas generator and is emitted in an approximately tangential direction from the first rotary member (10).

9. A seat belt retractor provided with a pretensioner according to any preceding claim.

## Patentansprüche

1. Gurtvorspanner für ein Bewegungseinschränkungssystem für die Sicherheit im Kraftfahrzeug, der aufweist: ein erstes drehbares Element (6), das mit einer Gurtbandaufwickelspule einer Zurückziehvorrichtung des Bewegungseinschränkungssystems verbunden ist; und eine Antriebseinrichtung, die als Reaktion auf einen Unfallzustand auslösbar ist, und gekennzeichnet durch ein zweites drehbares Element (10), das mit dem ersten drehbaren Element (6) koaxial ist und mittels der Antriebseinrichtung angetrieben wird; und bei dem die zwei koaxialen drehbaren Elemente (6, 10) gegenüberliegende Flächen aufweisen, die durch einen Hohlraum (14) mit Abstand angeordnet sind, der mit einer Kupplungsflüssigkeit gefüllt ist, wobei die gegenüberliegenden Flächen (12, 8) so geformt und relativ so angeordnet sind, daß eine Bewegung eines Elementes relativ zum anderen Element durch die Kupplungsflüssigkeit auf das andere Element und auf die Aufwickelspule übertragen wird.

2. Gurtvorspanner für ein Bewegungseinschränkungssystem für die Sicherheit im Kraftfahrzeug nach Anspruch 1, bei dem die Form und Position der gegenüberliegenden Flächen (12, 8) der drehbaren Elemente (6, 10) so ist, daß die Kupplungsflüssigkeit als Drehmomentumwandler wirkt.

3. Gurtvorspanner für ein Bewegungseinschränkungssystem für die Sicherheit im Kraftfahrzeug nach einem der vorhergehenden Ansprüche, bei dem der die Flüssigkeit enthaltende Hohlraum (14) in einer radialen Richtung zwischen den zwei relativ drehbaren Elementen (6, 10) angeordnet ist.

4. Gurtvorspanner für ein Bewegungseinschränkungssystem für die Sicherheit im Kraftfahrzeug nach einem der vorhergehenden Ansprüche, bei dem das erste drehbare Element als ein äußerer Rotor (10) ausgebildet ist, innerhalb dem ein Hohlraum (14), der die Flüssigkeit enthält, und das zweite drehbare Element enthalten ist, das als eine Turbine (6) ausgebildet ist.

5. Gurtvorspanner für ein Bewegungseinschränkungssystem für die Sicherheit im Kraftfahrzeug nach Anspruch 4, bei dem der äußere Rotor (10) sich nach innen erstreckende Flügel (12) aufweist, die in den Flüssigkeitshohlraum (14) hineinragen; und bei dem die Turbine (6) sich nach außen erstreckende Flügel (8) aufweist, die in den mit Flüssigkeit gefüllten Hohlraum (14) hineinragen.

6. Gurtvorspanner für ein Bewegungseinschränkungssystem für die Sicherheit im Kraftfahrzeug nach Anspruch 4 oder Anspruch 5, bei dem der äußere Rotor (10) und die Turbine (6) in einem abgedichteten Außengehäuse (2) enthalten sind.

7. Gurtvorspanner für ein Bewegungseinschränkungssystem für die Sicherheit im Kraftfahrzeug nach einem der vorhergehenden Ansprüche, bei dem das erste drehbare Element (10) so ausgeführt ist, daß es durch Reaktionskräfte angetrieben wird, die durch sich ausdehnendes Gas ausgeübt werden.

8. Gurtvorspanner für ein Bewegungseinschränkungssystem für die Sicherheit im Kraftfahrzeug nach Anspruch 7, bei dem das sich ausdehnende Gas durch mindestens einen Gasgenerator erzeugt und in einer annähernd tangentialen Richtung aus dem ersten drehbaren Element (10) emittiert wird.

9. Gurtbandzurückziehvorrichtung, die mit einem Gurtvorspanner nach einem der vorhergehenden Ansprüche versehen ist.

## Revendications

1. Dispositif de prétension pour un système de retenue de sécurité d'un d'un véhicule comprenant un premier élément rotatif (6) connecté à une bobine d'enroulement de la sangle d'un enrouleur d'un système de retenue, et un moyen d'entraînement pouvant être actionné en réponse à une collision, et caractérisé par un deuxième élément rotatif (10), coaxial au premier élément rotatif (6) et entraîné par le moyen d'entraînement, les deux éléments rotatifs coaxiaux (6, 10) comportant des surfaces opposées espacées par une cavité (14) remplie d'un fluide de couplage, les surfaces opposées (12, 8) étant formées et positionnées l'une par rapport à l'autre de sorte que le déplacement d'un élément par rapport à l'autre élément est transmis par l'intermédiaire du fluide de couplage à l'autre élément et à la bobine d'enroulement.

2. Dispositif de prétension pour un système de retenue de sécurité d'un véhicule selon la revendication 1, dans lequel la forme et la position des surfaces opposées (12, 8) des éléments rotatifs (6, 10) sont telles que le fluide de couplage fait fonction de convertisseur de couple.

3. Dispositif de prétension pour un système de retenue de sécurité d'un véhicule selon l'une quelconque des revendications précédentes, dans lequel la cavité contenant le fluide (14) est agencée dans une direction radiale entre deux éléments à rotation relative (6, 10).

4. Dispositif de prétension pour un système de retenue de sécurité d'un véhicule selon l'une quelconque des revendications précédentes, dans lequel le premier élément rotatif a la forme d'un rotor externe (10) dans lequel est agencée une cavité (14) contenant le fluide, le deuxième élément rotatif ayant la forme d'une turbine (6).

5. Dispositif de prétension pour un système de retenue de sécurité d'un véhicule selon la revendication 4, dans lequel le rotor externe (10) comprend des ailettes s'étendant vers l'intérieur (12), débordant dans la cavité du fluide (14), la turbine (6) comprenant des ailettes s'étendant vers l'extérieur (8), débordant dans la cavité remplie de fluide (14).

6. Dispositif de prétension pour un système de retenue de sécurité d'un véhicule selon l'une des revendications 4 ou 5, dans lequel le rotor externe (10) et la turbine (6) sont contenus dans un carter externe étanche (2).

7. Dispositif de prétension pour un système de retenue de sécurité d'un véhicule selon l'une quelconque des revendications précédentes, dans lequel le premier élément rotatif (10) est destiné à être entraîné par des forces de réaction exercées par la détente du gaz.

8. Dispositif de prétension pour un système de retenue de sécurité d'un véhicule selon la revendication 7, dans lequel le gaz de détente est produit par au moins un générateur de gaz et est émis dans une direction pratiquement tangentielle au premier élément rotatif (10).

9. Enrouleur de ceinture de siège comportant un dispositif de prétension selon l'une quelconque des revendications précédentes.
